# EUROPEAN PATENT APPLICATION

(11) **EP 4 575 775 A1**
(43) Date of publication of application: **25.06.2025**
(21) Application number: 23864393.6
(22) Date of filing: 15.06.2023
(51) Int. Cl.: G06F 9/445

(54) **PROCESS STARTING METHOD, PROCESS MANAGEMENT METHOD, AND MANAGEMENT APPARATUS**

(30) Priority: 13.09.2022 CN 202211119181
(71) Applicant: Shenzhen Yinwang Intelligent Technologies Co., Ltd., Shenzhen, Guangdong 518129 (CN)
(72) Inventor: DUAN, Chaoxiang, Shenzhen, Guangdong 518129 (CN); ZHOU, Binyan, Shenzhen, Guangdong 518129 (CN); MA, Tianqi, Shenzhen, Guangdong 518129 (CN)
(74) Representative: MERH-IP Matias Erny Reichl Hoffmann Patentanwälte PartG mbB
(86) International application number: PCT/CN2023/100435
(87) International publication number: WO 2024/055654

(57) **Abstract**

This application provides a process startup method, a process management method, and a management apparatus, to set an agent module for a management module in a vehicle, so that a process startup parameter is configured by using the agent module, to improve security of the management module. The management apparatus includes an execution management module and the agent module. The management module manages a running status of at least one process. In a process in which the management module starts up a first process, the agent module obtains configuration information that is of the first process and that is sent by the management module, where the first process is any one of the at least one process. Subsequently, the agent module sets a parameter of the agent module based on the configuration information of the first process, and calls a startup function to start up the first process.

## Description

This application claims priority to Chinese Patent Application No. 202211119181.0, filed with the China National Intellectual Property Administration on September 13, 2022 and entitled "PROCESS STARTUP METHOD, PROCESS MANAGEMENT METHOD, AND MANAGEMENT APPARATUS", which is incorporated herein by reference in its entirety.

### TECHNICAL FIELD

This application relates to the field of vehicles, and in particular, to a process startup method, a process management method, and a management apparatus.

### BACKGROUND

An automotive open system architecture (automotive open system architecture, AUTOSAR) is a standard software architecture widely used in the industry currently, and is divided into an AUTOSAR adaptive platform (adaptive platform, AP) and a classic platform CP, each having a series of specifications. The CP has been widely used in an embedded electronic control unit (electric control unit, ECU) of a conventional vehicle, and can satisfy a requirement in a scenario including an engine controller, a brake controller, or the like with a high requirement for functional safety and real-time performance but a low requirement for computing power. The AP is a new architecture that emerges to satisfy requirements of next-generation intelligent connected vehicles for high performance and high computing power and requirements for continuous connection and integration in complex scenarios such as autonomous driving and cloudification. In the future, the AP will be widely used in autonomous driving vehicles.

In the AUTOSAR, a management module, for example, an execution management (execution management, EM) module, may be disposed to perform life cycle management on the AP platform and an application, including functions such as starting up and stopping a process (satisfying process dependency), setting a resource limit (CPU and memory usage), configuring core binding, and setting a scheduling priority and a scheduling policy. However, a security level of the management module needs to reach a function security level corresponding to an application that has a highest function security level and that is managed by the management module. In an existing AUTOSAR, running security of the management module is insufficient, and a security requirement cannot be satisfied.

### SUMMARY

This application provides a process startup method, a process management method, and a management apparatus, to set an agent module for a management module in a vehicle, so that a process startup parameter is configured by using the agent module, to improve security of the management module.

According to a first aspect, this application provides a management apparatus, applied to a vehicle, including an execution management module and an agent module.

The management module is configured to manage a running status of at least one process, where the at least one process may be all or some processes running in a system in which the management apparatus is deployed.

The agent module is configured to: in a process in which the execution management module starts up a first process, obtain configuration information that is of the first process and that is input by the management module, where the first process is any one of the at least one process; and call a parameter configuration parameter based on the configuration information of the first process to set a parameter of the agent module, and start up the first process by calling a startup function, where the parameter configuration function includes at least one of a signal-safe function and a non-signal-safe function.

In an implementation of this application, the agent module is set to configure a process startup parameter and start up the process, and the agent module may call the signal-safe function or the non-signal-safe function to configure the parameter, so that the management module does not need to call the non-signal-safe function to configure the process startup parameter. A problem that the management module cannot call the non-signal-safe function when the process is started up can be resolved, and security of the management module is improved, so that the management module satisfies a security requirement.

In a possible implementation, the management module is further configured to: before sending the configuration information of the first process to the agent module, start up the agent module. Therefore, in this implementation of this application, startup of the agent module is triggered only in a process in which the management module starts up the first process, and the agent module does not need to continuously run. This means that the management module does not need to directly start up the first process, and the first process may be started up by starting up the agent module, to improve running security of the management module.

In a possible implementation, that the management module starts up the agent module may specifically include: the management module is further configured to create a subprocess by calling a fork function, and start up the agent module in the subprocess by calling the startup function. Alternatively, this may be understood as converting the subprocess to the agent module.

In an implementation of this application, before sending the configuration information of the process to the agent module, the management module may start up the agent module by calling the fork function and the startup function. Therefore, the agent module does not need to continuously run, and the agent module may be started up when the process is started up, thereby improving resource utilization of the management apparatus.

In a possible implementation, the agent module is further configured to call the non-signal-safe function to set the parameter of the agent module based on the configuration information of the first process.

In an implementation of this application, when configuring the process startup parameter, the agent module may call the non-signal-safe function to configure the parameter, so that the process parameter can be configured, and the process can be started up subsequently.

In a possible implementation, the management apparatus further includes a monitoring module, configured to: obtain status information of the at least one process, where the status information includes information generated when the at least one process is started up or run; and check the status information of the at least one process, and if the status information of the at least one process is abnormal, trigger processing on a process in which an exception occurs.

In an implementation of this application, the monitoring module is further configured to monitor a running status of a process managed by the management module in real time, to ensure that the process managed by the management module runs normally.

In a possible implementation, the monitoring module may specifically receive the status information that is of the at least one process and that is sent by the management module. Therefore, the monitoring module may monitor the running status of the at least one process based on the status information reported by the management module, to improve running security of the process managed by the management module.

In a possible implementation, the status information includes at least one of the following: abnormal abort of any process, a startup sequence of the at least one process, a shutdown sequence of the at least one process, a dependency sequence of the at least one process in a startup or shutdown process, or startup information configured by the management module for the at least one process, where the startup information configured by the management module for the at least one process includes at least one of a startup parameter, an environment variable, a resource group, a running core number, a priority, or a scheduling policy.

In a possible implementation, the monitoring module is configured to: check whether the at least one process is started up or stopped according to a preset sequence, and if not, trigger the management module or another module to adjust the running status of the at least one process according to the preset sequence. Therefore, the monitoring module may monitor a startup sequence of the process managed by the management module, to improve running security of the management module, so that the management module satisfies a security requirement.

In a possible implementation, the configuration information of the first process includes one or more of the following: a startup parameter used to start up the first process, an environment variable used to run the first process, a resource group used to run the first process, a core number of a central processing unit (central processing unit, CPU) that runs the first process, a priority corresponding to the first process, a scheduling policy corresponding to the first process, a security policy corresponding to the first process, or a memory policy corresponding to the first process.

According to a second aspect, this application provides a management apparatus, applied to a vehicle, including a management module and a monitoring module.

The management module is configured to manage a running status of at least one process.

The monitoring module is configured to obtain status information of the at least one process, where the status information of the at least one process includes information generated when the at least one process is run or started up.

The monitoring module is further configured to: check the status information of the at least one process, and if a startup status of the at least one process is abnormal, trigger processing on a process in an abnormal state.

Therefore, in an implementation of this application, the monitoring module is configured to monitor a running status of a process managed by the management module in real time, to ensure that the process managed by the management module runs normally.

In a possible implementation, the monitoring module may be specifically configured to receive the status information that is of the at least one process and that is sent by the management module. Therefore, the monitoring module may monitor the running status of the at least one process based on the status information reported by the management module, to improve running security of the process managed by the management module.

In a possible implementation, the status information of the at least one process includes at least one of the following: abnormal abort of any process, a startup sequence of the at least one process, a shutdown sequence of the at least one process, a dependency sequence of the at least one process in a startup or shutdown process, or startup information configured by the management module for the at least one process, where the startup information configured by the management module for the at least one process includes at least one of a startup parameter, an environment variable, a resource group, a running core number, a priority, or a scheduling policy.

In a possible implementation, the monitoring module is configured to: check whether the at least one process is started up according to a preset sequence, and if not, trigger to adjust the running status of the at least one process according to the preset sequence.

According to a third aspect, this application provides a process startup method, applied to a management apparatus, where the management apparatus includes a management module and an agent module. The method includes: inputting configuration information of a first process to the agent module by using the management module, where the first process is any one of at least one process managed by the management module; and triggering, by using the management module, the agent module to call a parameter configuration function based on the configuration information of the first process to set a parameter of the agent module, and starting up the first process by calling a startup function, where the parameter configuration function includes at least one of a signal-safe function and a non-signal-safe function.

For effect implemented in the third aspect and any implementation of the third aspect, refer to related descriptions of the first aspect. Details are not described herein.

In a possible implementation, before the inputting configuration information of a first process to the agent module by using the management module, the method may further include: starting up the agent module by using the management module.

In a possible implementation, the starting up the agent module by using the management module may include: creating a subprocess by calling a fork function by using the management module, and starting up the agent module in the subprocess by calling the startup function.

In a possible implementation, the setting, by using the agent module, a startup parameter of the agent module based on the configuration information of the first process may include: calling the non-signal-safe function by using the agent module, and setting the startup parameter of the agent module based on the configuration information of the first process.

In a possible implementation, the management apparatus may further include a monitoring module, and the method may further include: obtaining status information of at least one process by using the monitoring module, where the status information of the at least one process includes information generated when the at least one process is started up or run; and checking the status information of the at least one process by using the monitoring module, and if the status information of the at least one process is abnormal, triggering processing on a process in an abnormal state.

In a possible implementation, the obtaining status information by using the monitoring module may include: receiving, by using the monitoring module, the status information that is of the at least one process and that is sent by the management module.

In a possible implementation, the status information of the at least one process includes at least one of the following: abnormal abort of any process, a startup sequence of the at least one process, a shutdown sequence of the at least one process, a dependency sequence of the at least one process in a startup or shutdown process, or startup information configured by the management module for the at least one process, where the startup information configured by the management module for the at least one process includes at least one of a startup parameter, an environment variable, a resource group, a running core number, a priority, or a scheduling policy.

In a possible implementation, the checking the status information of the at least one process by using the monitoring module, and if the status information of the at least one process is abnormal, triggering the management module to process a process in an abnormal state may include: checking, by using the monitoring module, whether the at least one process is started up or stopped according to a preset sequence, and if not, triggering the management module to adjust a running status of the at least one process according to the preset sequence.

In a possible implementation, the configuration information of the first process includes one or more of the following: a startup parameter used to start up the first process, an environment variable used to run the first process, a resource group used to run the first process, a core number of a CPU that runs the first process, a priority corresponding to the first process, a scheduling policy corresponding to the first process, a security policy corresponding to the first process, or a memory policy corresponding to the first process.

According to a fourth aspect, this application provides a process management method, applied to a management apparatus, where the management apparatus includes a management module and a monitoring module. The method includes: managing a running status of at least one process by using the management module; obtaining status information of at least one process by using the monitoring module, where the status information of the at least one process includes information generated when the at least one process is run or started up; and checking a startup state of the at least one process by using the monitoring module, and if the startup state of the at least one process is abnormal, triggering, by using the monitoring module, the management module to process a process in an abnormal state.

For effect implemented in the fourth aspect and any implementation of the fourth aspect, refer to related descriptions of the second aspect. Details are not described herein.

In a possible implementation, the obtaining status information of at least one process by using the monitoring module may include: receiving, by using the monitoring module, the status information that is of the at least one process and that is sent by the management module.

In a possible implementation, the status information of the at least one process includes at least one of the following: a startup sequence of the at least one process, a shutdown sequence of the at least one process, a dependency sequence of the at least one process in a startup or shutdown process, or startup information configured by the management module for the at least one process, where the startup information configured by the management module for the at least one process includes at least one of a startup parameter, an environment variable, a resource group, a running core number, a priority, or a scheduling policy.

In a possible implementation, the checking a startup state of the at least one process by using the monitoring module, and if the startup state of the at least one process is abnormal, triggering, by using the monitoring module, the management module to process a process in an abnormal state may include: checking, by using the monitoring module, whether the at least one process is started up according to a preset sequence, and if not, triggering, by using the monitoring module, the management module to adjust the running status of the at least one process according to the preset sequence.

According to a fifth aspect, an embodiment of this application provides a management apparatus, including a processor and a memory, where the processor and the memory are interconnected by using a line, and the processor invokes program code in the memory to perform a processing-related function of the management apparatus shown in any implementation of the first aspect. Optionally, the management apparatus may be a chip.

According to a sixth aspect, an embodiment of this application provides a management apparatus, including a processor and a memory, where the processor and the memory are interconnected by using a line, and the processor invokes program code in the memory to perform a processing-related function of the management apparatus shown in any implementation of the second aspect. Optionally, the management apparatus may be a chip.

According to a seventh aspect, an embodiment of this application provides a management apparatus. The management apparatus may also be referred to as a digital processing chip or a chip. The chip includes a processing unit and a communication interface. The processing unit obtains program instructions by using the communication interface, the program instructions are executed by the processing unit, and the processing unit is configured to perform a processing-related function in any one of the optional implementations of the first aspect or the second aspect.

According to an eighth aspect, an embodiment of this application provides a vehicle, including any one of the management apparatuses in the fifth aspect to the seventh aspect.

According to a ninth aspect, an embodiment of this application provides a computer-readable storage medium, including instructions. When the instructions are run on a computer, the computer is enabled to perform the steps performed by any optional module in the first aspect or the second aspect.

According to a tenth aspect, an embodiment of this application provides a computer program product including instructions. When the computer program product runs on a computer, the computer is enabled to perform the steps performed by any optional module in the first aspect and the second aspect.

### BRIEF DESCRIPTION OF DRAWINGS

FIG. 1 is a diagram of a structure of a vehicle according to this application;
FIG. 2 is a diagram of a structure of another vehicle according to this application;
FIG. 3 is a diagram of a system architecture of a classic platform CP deployed on a vehicle according to this application;
FIG. 4 is a diagram of a system architecture of an AP platform deployed on a vehicle according to this application;
FIG. 5 is a diagram of a process startup procedure according to this application;
FIG. 6 is a diagram of a structure of a management apparatus according to this application;
FIG. 7 is a diagram of a structure of another management apparatus according to this application;
FIG. 8 is a diagram of a structure of another management apparatus according to this application;
FIG. 9 is a schematic flowchart of a process startup method according to this application;
FIG. 10 is a schematic flowchart of a process management method according to this application;
FIG. 11 is a diagram of a structure of another management apparatus according to this application;
FIG. 12 is a diagram of another process startup procedure according to this application;
FIG. 13 is a diagram of another process startup procedure according to this application;
FIG. 14 is a diagram of a process management procedure according to this application;
FIG. 15 is a diagram of another process management procedure according to this application; and
FIG. 16 is a diagram of another process management procedure according to this application.

### DESCRIPTION OF EMBODIMENTS

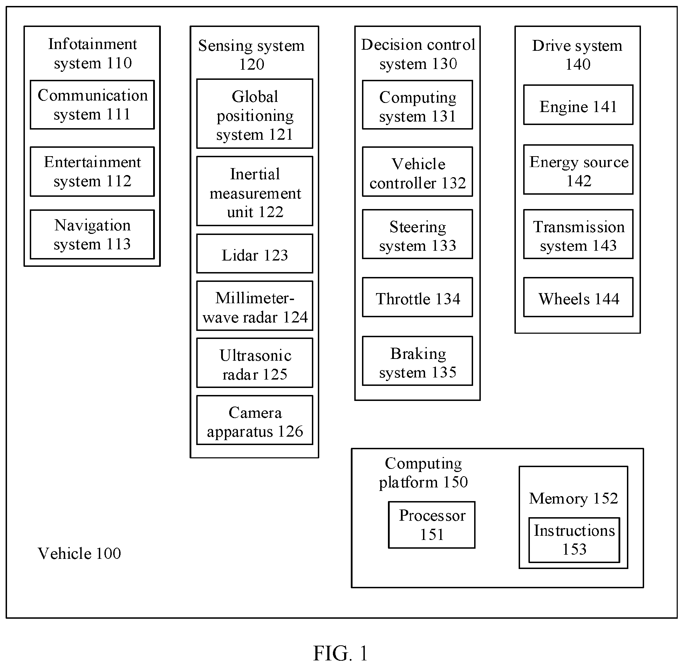

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application. For ease of understanding of this solution, in an embodiment of this application, a structure of a vehicle provided in this application is first described with reference to FIG. 1. FIG. 1 is a diagram of a structure of a vehicle according to an embodiment of this application. FIG. 1 is a functional block diagram of a vehicle 100 according to an embodiment of this application. The vehicle 100 may be configured to be in a full or partial autonomous driving mode. For example, the vehicle 100 may obtain surrounding environment information of the vehicle 100 by using a sensing system 120, and obtain an autonomous driving policy based on analysis of the surrounding environment information to implement full autonomous driving, or present an analysis result to a user to implement partial autonomous driving.

The vehicle 100 may include various subsystems, such as an infotainment system 110, the sensing system 120, a decision control system 130, a drive system 140, and a computing platform 150. Optionally, the vehicle 100 may include more or fewer subsystems, and each subsystem may include a plurality of components. In addition, each subsystem and component of the vehicle 100 may be interconnected in a wired or wireless manner.

In some embodiments, the infotainment system 110 may include a communication system 111, an entertainment system 112, and a navigation system 113.

The communication system 111 may include a wireless communication system 111. The wireless communication system 111 may perform wireless communication with one or more devices directly, or through a communication network. For example, the wireless communication system 111 may use 3G cellular communication, such as CDMA, EVD0, GSM/GPRS, or 4G cellular communication, such as LTE, or 5G cellular communication. The wireless communication system 111 may communicate with a wireless local area network (wireless local area network, WLAN) through Wi-Fi. In some embodiments, the wireless communication system 146 may directly communicate with a device through an infrared link, Bluetooth, or ZigBee. The wireless communication system 111 may include one or more dedicated short-range communication (dedicated short-range communication, DSRC) devices, and these devices may include public and/or private data communication between the vehicles and/or roadside stations.

The entertainment system 112 may include a central control screen, a microphone, and a speaker. The user may listen to the radio and play music in the vehicle based on the entertainment system 112. Alternatively, a mobile phone is connected to the vehicle, and projection of the mobile phone is implemented on the central control screen. The central control screen may be a touchscreen, and the user may perform an operation by touching the screen. In some cases, a voice signal of the user may be obtained by using the microphone, and some control performed by the user on the vehicle 100 is implemented based on analysis of the voice signal of the user, for example, a temperature inside the vehicle is adjusted. In other cases, music may be played to the user by using the speaker.

The navigation system 113 may include a map service provided by a map provider, to provide navigation of a traveling route for the vehicle 100, and the navigation system 113 may be used together with a global positioning system 121 and an inertia measurement unit 122 of the vehicle. The map service provided by the map provider may be a two-dimensional map or a high-definition map.

The sensing system 120 may include several types of sensors that sense the surrounding environment information of the vehicle 100. For example, the sensing system 120 may include the global positioning system 121 (the global positioning system may be a GPS system, or may be a BeiDou system or another positioning system), the inertial measurement unit (inertial measurement unit, IMU) 122, a lidar 123, a millimeter-wave radar 124, an ultrasonic radar 125, and a camera apparatus 126. The sensing system 120 may further include sensors (for example, an in-vehicle air quality monitor, a fuel gauge, and an oil temperature gauge) of an internal system of the vehicle 100 that is monitored. Sensor data from one or more of these sensors can be used to detect an object and corresponding features (a location, a shape, a direction, a speed, and the like) of the object. Such detection and recognition are a key function for implementing a safe operation by the vehicle 100.

The global positioning system 121 may be configured to determine a geographical location of the vehicle 100.

The inertia measurement unit 122 is configured to sense a location and an orientation change of the vehicle 100 based on an inertial acceleration. In some embodiments, the inertia measurement unit 122 may be a combination of an accelerometer and a gyroscope.

The lidar 123 may sense, by using laser light, an object in an environment in which the vehicle 100 is located. In some embodiments, the lidar 123 may include one or more laser sources, a laser scanner, one or more detectors, and another system component.

The millimeter-wave radar 124 may sense an object in an ambient environment of the vehicle 100 by using a radio signal. In some embodiments, in addition to sensing the object, the millimeter-wave radar 124 may be further configured to sense a speed and/or a moving direction of the object.

The ultrasonic radar 125 may sense an object around the vehicle 100 by using an ultrasonic signal.

The camera apparatus 126 may be configured to capture image information of the ambient environment of the vehicle 100. The camera apparatus 126 may include a monocular camera, a binocular camera, a structured light camera, a panoramic camera, and the like. The image information obtained by the camera apparatus 126 may include static image information, and may further include video stream information.

The decision control system 130 includes a computing system 131 that performs analysis and decision-making based on information obtained by the sensing system 120. The decision control system 130 further includes a vehicle controller 132 that controls a power system of the vehicle 100, and a steering system 133, a throttle 134, and a braking system 135 that are configured to control the vehicle 100.

The computing system 131 may process and analyze various information obtained by the sensing system 120 to recognize a target, an object, and/or a feature in the ambient environment of the vehicle 100. The target may include a pedestrian or an animal, and the object and/or the feature may include a traffic signal, a road boundary, and an obstacle. The computing system 131 may use technologies such as an object recognition algorithm, a structure from motion (structure from motion, SFM) algorithm, and video tracking. In some embodiments, the computing system 131 may be configured to: draw a map for an environment, track an object, estimate a speed of the object, and so on. The computing system 131 may analyze the various obtained information and obtain a control policy for the vehicle.

The vehicle controller 132 may be configured to coordinate and control a power battery and an engine 141 of the vehicle, to improve power performance of the vehicle 100.

The steering system 133 may be configured to adjust a moving direction of the vehicle 100. For example, in an embodiment, the steering system 133 may be a steering wheel system.

The throttle 134 is configured to control an operating speed of the engine 141 and further control a speed of the vehicle 100.

The braking system 135 is configured to control the vehicle 100 to decelerate. The braking system 135 may use friction to reduce a rotational speed of wheels 144. In some embodiments, the braking system 135 may convert kinetic energy of the wheels 144 to a current. The braking system 135 may also reduce the rotational speed of the wheels 144 in another manner, to control the speed of the vehicle 100.

The drive system 140 includes a component that provides power for the vehicle 100 to move. In an embodiment, the drive system 140 may include the engine 141, an energy source 142, a transmission system 143, and the wheels 144. The engine 141 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 141 converts the energy source 142 to mechanical energy.

Examples of the energy source 142 include gasoline, diesel, another petroleum-based fuel, propane, another compressed gas-based fuel, anhydrous alcohol, a solar panel, a battery, and another source of power. The energy source 142 may also provide energy to another system of the vehicle 100.

The transmission system 143 may transfer mechanical power from the engine 141 to the wheels 144. The transmission system 143 may include a gearbox, a differential, and a drive shaft. In an embodiment, the transmission system 143 may further include another component, for example, a clutch. The drive shaft may include one or more shafts that may be coupled to one or more wheels 144.

Some or all functions of the vehicle 100 are controlled by the computing platform 150. The computing platform 150 may include at least one processor 151, and the processor 151 may execute instructions 153 stored in a non-transitory computer-readable medium like a memory 152. In some embodiments, the computing platform 150 may alternatively be a plurality of computing devices that control individual components or subsystems of the vehicle 100 in a distributed manner.

The processor 151 may be any conventional processor, for example, a commercially available CPU. Alternatively, the processor 151 may further include a graphics processing unit (graphics processing unit, GPU), a field programmable gate array (field programmable gate array, FPGA), a system-on-a-chip (system-on-a-chip, SOC), an application-specific integrated circuit (application-specific integrated circuit, ASIC), or a combination thereof. The processor 151 may be located on a device far away from the vehicle and perform wireless communication with the vehicle.

In some embodiments, the memory 152 may include instructions 153 (for example, program logic), and the instructions 153 may be executed by the processor 151 to perform various functions of the vehicle 100. The memory 152 may also include additional instructions, including instructions used to send data to, receive data from, interact with, and/or control one or more of the infotainment system 110, the sensing system 120, the decision control system 130, and the drive system 140.

In addition to the instructions 153, the memory 152 may further store data, such as a road map, route information, a location, a direction, a speed, and other similar vehicle data of the vehicle, and other information. Such information may be used by the vehicle 100 and the computing platform 150 during operation of the vehicle 100 in autonomous, semi-autonomous, and/or manual modes.

The computing platform 150 may control the functions of the vehicle 100 based on inputs received from various subsystems (for example, the drive system 140, the sensing system 120, and the decision control system 130). For example, the computing platform 150 may use an input from the decision control system 130 to control the steering system 133 to avoid an obstacle detected by the sensing system 120. In some embodiments, the computing platform 150 may be operated to provide control over a plurality of aspects of the vehicle 100 and the subsystem of the vehicle 100.

Optionally, one or more of the foregoing components may be installed separately from or associated with the vehicle 100. For example, the memory 152 may exist partially or completely separate from the vehicle 100. The foregoing components may be communicatively coupled together in a wired and/or wireless manner.

Optionally, the foregoing components are merely examples. During actual application, components in the foregoing modules may be added or deleted based on an actual requirement. FIG. 1 should not be understood as a limitation on embodiments of this application.

An autonomous driving vehicle traveling on a road, for example, the vehicle 100, may recognize an object in an ambient environment of the vehicle, to determine whether to adjust a current speed. The object may be another vehicle, a traffic control device, or an object of another type. In some examples, each recognized object may be considered independently, and may be used to determine a speed to be adjusted to by the autonomous driving vehicle based on features of each object, such as a current speed of the object, an acceleration of the object, and a distance between the object and the vehicle.

Optionally, the vehicle 100 or a sensing and computing device (for example, the computing system 131 and the computing platform 150) associated with the vehicle 100 may predict a behavior of the recognized object based on the features of the recognized object and a state (for example, traffic, rain, and ice on a road) of the ambient environment. Optionally, each recognized object depends on a behavior of another recognized object, and therefore all recognized objects may be further considered together to predict a behavior of a single recognized object. The vehicle 100 can adjust the speed of the vehicle 100 based on the predicted behavior of the recognized object. In other words, the autonomous driving vehicle can determine, based on the predicted behavior of the object, a steady status (for example, acceleration, deceleration, or stop) to which the vehicle needs to be adjusted to. In this process, other factors may also be considered to determine the speed of the vehicle 100, for example, a lateral location of the vehicle 100 on a road on which the vehicle 100 is traveling, a curvature of the road, and proximity of static and dynamic objects.

In addition to providing an instruction for adjusting the speed of the autonomous driving vehicle, the computing device may further provide an instruction for changing a steering angle of the vehicle 100, so that the autonomous driving vehicle follows a given trajectory and/or maintains safe lateral and longitudinal distances from an object (for example, a car in an adjacent lane on the road) near the autonomous driving vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

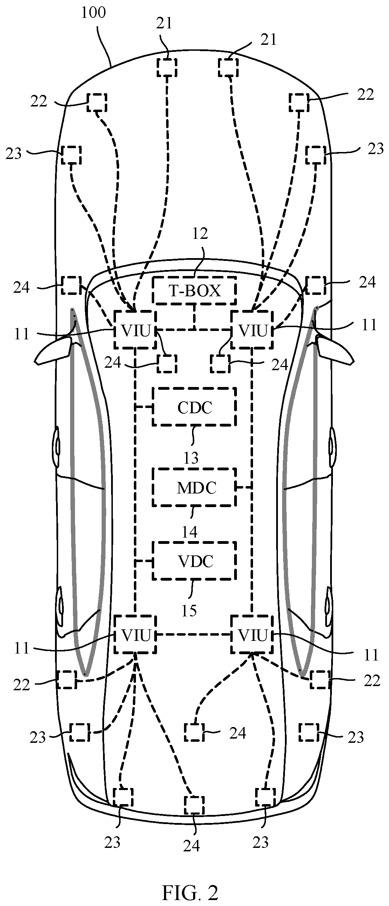

FIG. 2 is a diagram of a system architecture of the vehicle 100 based on some embodiments. The vehicle 100 includes a plurality of vehicle integration units (vehicle integration units, VIUs) 11, an Internet of Vehicles device (telematic box, T-BOX) 12, a cockpit domain controller (cockpit domain controller, CDC), a mobile data center (mobile data center, MDC) 14, and a vehicle domain controller (vehicle domain controller, VDC) 15.

The vehicle 100 further includes a plurality of types of sensors disposed on the vehicle, including a lidar 21, a millimeter-wave radar 22, an ultrasonic radar 23, and a camera apparatus 24. Each type of sensor may include a plurality of sensors. It should be understood that although FIG. 2 shows location layouts of different sensors on the vehicle 100, a quantity and a location layout of sensors in FIG. 2 are merely examples. A person skilled in the art may properly select types, a quantity, and a location layout of the sensors based on a requirement.

FIG. 2 shows four VIUs. It should be understood that a quantity and locations of VIUs in FIG. 2 are merely examples. A person skilled in the art may select a proper quantity and locations of VIUs based on an actual requirement.

The vehicle integration unit VIU 11 provides a plurality of vehicle components with some or all data processing functions or control functions required by the vehicle components. The VIU may have one or more of the following functions.
1. An electronic control function, which means that VIU is configured to implement electronic control functions provided by electronic control units (electronic control units, ECUs) in some or all the vehicle components, for example, a control function required by a vehicle component, for another example, a data processing function required by a vehicle component.
2. A function that is the same as that of a gateway, which means that the VIU may further have some or all functions the same as those of the gateway, for example, a protocol conversion function, protocol encapsulation and forwarding functions, and a data format conversion function.
3. A function of processing data across vehicle components, which means that processing, calculating, and the like are performed on data obtained from actuators of a plurality of vehicle components.

It should be noted that, the data related in the foregoing functions may include running data of the actuator in the vehicle component, for example, a motion parameter of the actuator and a working status of the actuator. The data related in the foregoing functions may also be data collected by using a data collection unit (for example, a sensitive element) of the vehicle component, for example, information about a road on which the vehicle travels or weather information that is collected by using the sensitive element of the vehicle. This is not specifically limited in embodiments of this application.

In the example of the vehicle 100 in FIG. 2, the vehicle 100 may be divided into a plurality of domains (domains), and each domain has an independent domain controller (domain controller). Specifically, in FIG. 2, two domain controllers are shown: a cockpit domain controller CDC 13 and a vehicle domain controller VDC 15.

The cockpit domain controller CDC 13 may be configured to implement function control of a cockpit area of the vehicle 100. Vehicle components in the cockpit area may include a head-up display (head-up display, HUD), a dashboard, a radio, a central control screen, a navigation system, a camera, and the like.

The vehicle domain controller VDC 15 may be configured to coordinate and control the power battery and the engine 141 of the vehicle, to improve power performance of the vehicle 100. In some embodiments, the vehicle controller 132 in FIG. 1 may implement various functions of the VDC.

FIG. 2 further shows an Internet of Vehicles device T-BOX 12 and a mobile data center MDC 13. The T-BOX 12 may be configured to implement communication connections between the vehicle 100 and internal and external devices of the vehicle 100. The T-BOX may obtain in-vehicle device data by using a bus of the vehicle 100, or may be communicatively connected to a mobile phone of a user by using a wireless network. In some embodiments, the T-BOX 12 may be included in the communication system 111 in FIG. 1. The mobile data center MDC 13 is configured to output execution control instructions such as driving, transmission, steering, and braking based on core control algorithms such as environment sensing and positioning, intelligent planning and decision making, and vehicle motion control, thereby implementing automatic control of the vehicle 100, and further implementing human-machine interaction of vehicle driving information by using a human-machine interaction interface. In some embodiments, the computing platform 150 in FIG. 1 may implement various functions of the MDC 13.

The four VIUs 11 in FIG. 2 form a ring topology connection network, each VIU 11 is communicatively connected to a sensor at a nearby location of the VIU, and the T-BOX 12, the CDC 13, the MDC 14, and the VDC 15 are communicatively connected to the ring topology connection network of the VIU. The VIU 11 may obtain information from each sensor, and report the obtained information to the CDC 13, the MDC 14, and the VDC 15. The T-BOX 12, the CDC 13, the MDC 14, and the VDC 15 may alternatively implement mutual communication by using the ring topology network.

It should be understood that, the ring topology connection network connection is merely an example, and a person skilled in the art may select another proper VIU connection manner based on a requirement.

The connections between the VIUs may be, for example, an Ethernet (Ethernet), the connections between the VIUs and the T-BOX 12, the CDC 13, the MDC 14, and the VDC 15 may be, for example, an Ethernet or a peripheral component interconnect express (peripheral component interconnect express, PCIe) bus, and the connections between the VIUs and the sensors may be, for example, a controller area network (controller area network, CAN), a local interconnect network (local interconnect network, LIN), a FlexRay, and a media oriented system transport (media oriented system transport, MOST).

An AUTOSAR of the vehicle may be classified into an AP AUTOSAR and a CP AUTOSAR. The CP AUTOSAR may also be referred to as a classic AUTOSAR. The CP has been widely used in an embedded ECU of a conventional vehicle, and can satisfy a requirement of a scenario with a high requirement for functional safety and real-time performance but a low requirement for computing power, for example, an engine controller, and a brake controller. The AP is a new architecture that emerges to satisfy requirements of continuous connection and integration in complex scenarios such as a scenario with a high requirement for performance and a high requirement for computing power, autonomous driving, and cloudification of next-generation intelligent connected vehicles. In the future, the AP will be widely used in autonomous driving vehicles.

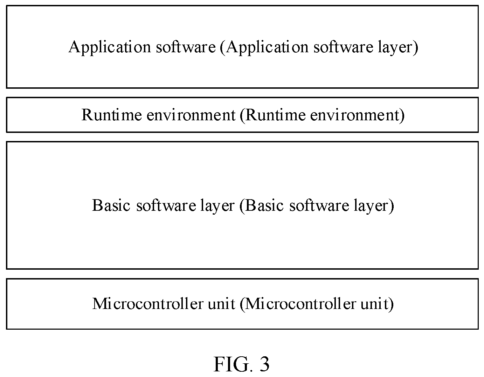

FIG. 3 is a diagram of an architecture of a CP AUTOSAR. The CP AUTOSAR may be divided into three layers from top to bottom: an application software (application software) layer, a runtime environment (runtime environment) layer, and a basic software (basic software) layer. The CP AUTOSAR runs on a microcontroller unit (microcontroller unit).

The application software (application software, ASW) layer is software that implements a specific application function. The application software layer may include a plurality of software components (software components, SWC).

The runtime environment (runtime environment, RTE) layer separates the application software layer from the basic software layer to provide an operating environment for application layer software, to perform process time slice scheduling, data exchange between application layer modules, data exchange between the application layer and the basic software layer, and the like.

The basic software (basic software, BSW) layer includes the following four parts:
a microcontroller abstraction layer (microcontroller abstraction layer, MCAL) that is driver software directly related to hardware for, for example, operating on a memory, a communication register, and an I/O interface;
an ECU abstraction layer (ECU abstraction layer, ECUAL) that unifies basic functions and interfaces of a controller, for example, parses a CAN packet, forwards a gateway packet, and controls a memory read/write process;
a service layer (service layer) that provides various background services for the application layer, such as network management, memory management, bus communication management, and an operating system; and
a complex device driver (complex device driver, CDD) that provides a user with a possibility of writing special device driver software.

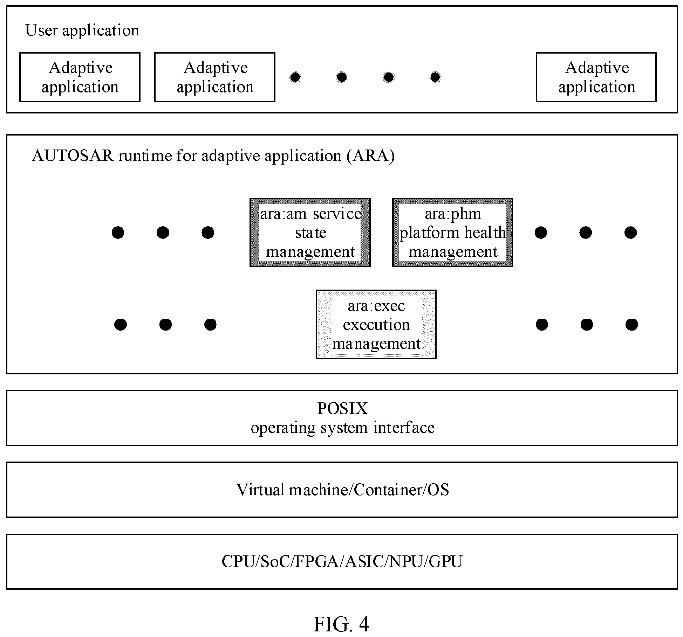

FIG. 4 is a diagram of an architecture of an AP AUTOSAR. As shown in FIG. 4, from top to bottom, the AP AUTOSAR may include a user application (user application) layer including a plurality of adaptive applications (adaptive applications, AAs); an AUTOSAR runtime for adaptive application (runtime for adaptive application, ARA) layer including a plurality of functional modules; a POSIX layer; a virtual machine/container/operating system layer; and a hardware layer at bottom, where the hardware layer may include but is not limited to a hardware device like a CPU/SoC/FPGA/NPU/GPU.

The ARA may include a plurality of functional units, and each functional unit provides a service. Services provided by the ARA are referred to as adaptive platform services, including the following.

### ara::exec execution management (EM):

A main function of the EM mainly is to perform life cycle management on an AP platform and an application, including functions such as starting up and stopping a process (satisfying process dependency), setting a resource limit (a CPU and memory usage), configuring core binding, setting a scheduling priority, and setting a scheduling policy. After a system is started up, an OS initializes the EM as an initial process, and then the EM loads another function group. For example, if a state of a function group is set to state up, it indicates that the function group is started up. After basic components of the platform are running, the EM starts up platform applications (such as functional modules of the platform) and common applications (such as apps installed by the user) in sequence based on machine manifest and execution manifest configuration files.

### ara::sm state management (SM):

The EM is responsible for loading, starting up, and shutting down an FC and an AA, while the SM is responsible for determining when to load and start up, and shut down the FC and the AA. In addition, a main function of the SM is to manage a running mode of normal runtime in a machine, which is similar to running mode management of the ECU in the CP. A relationship between the SM and the EM in the AP is similar to a relationship between a BswM and an EcuM in the CP.

### ara::phm platform health management (PHM):

The PHM performs health status management on the application, including multi-error detection functions: alive supervision, deadline supervision, logical supervision, and health status, and may trigger corresponding recovery actions for detected errors.

According to related specifications, for example, AUTOSAR_RS_Safety (R2011), the EM should reach a function security level corresponding to an application that has a highest function security level and that is managed by the EM. Function security certification (such as ASIL-D) requires that code of a module that passes the certification meets a function security requirement, and a corresponding mechanism is required to monitor internal logic or an internal process of the module.

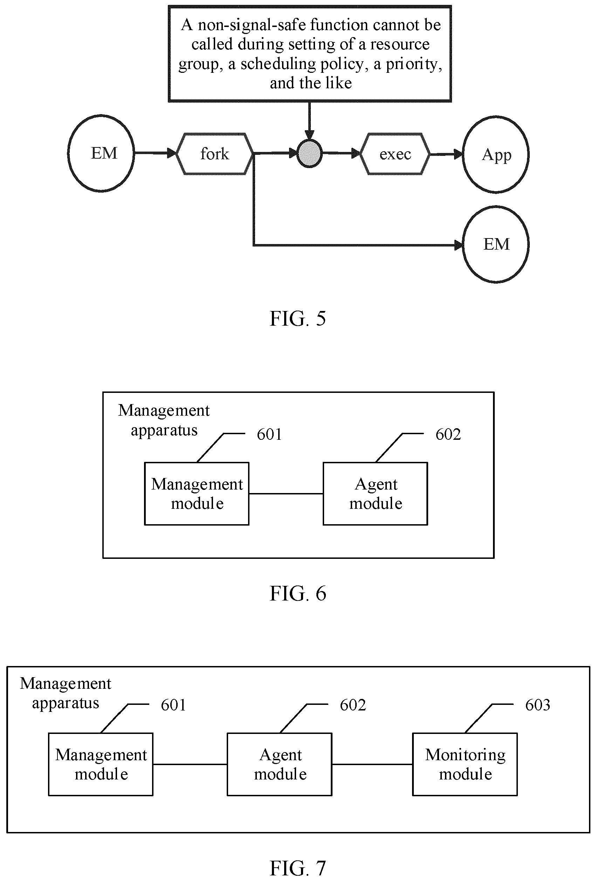

When a function group is started up or converted, the EM calls fork+exec to start up an application. As shown in FIG. 5, the EM first calls a fork function to fork a process, and then configures a resource group, a scheduling policy, a priority, or the like for the process. In this period, a non-signal-safe function cannot be called. Then, an exec function is called to convert the forked process to an application that needs to be started up. According to POSIX manuals provided by Linux and QNX, for a multi-thread process, only signal-safe functions can be called between fork and exec. Before starting up the application, the EM needs to perform operations such as core binding, resource group configuration, scheduling policy configuration, and scheduling priority configuration. Some functions of the EM, such as the core binding, the scheduling policy configuration, and the scheduling priority configuration, depend on non-signal-safe functions. Therefore, according to the current EM specification architecture, EM code cannot satisfy the function security requirement.

In addition, the current AUTASAR EM specification does not provide related description of EM running status check. According to the function security certification requirement, if an EM module needs to satisfy the function security certification requirement, a mechanism is required to ensure that internal logic of the EM module is correctly executed. According to the AUTASAR EM specification, there is no mechanism in the EM for detecting a running status of the EM and handling an exception.

For example, in some common process startup solutions, for example, a security controller is configured to monitor at least one vehicle controller separated from the security controller. The security controller is operatively connected to monitor an input and an output of the vehicle controller. The security controller includes a standard computing module with customized input and output modules. The security controller is configured to override a vehicle controller command for an item controlled by the vehicle controller. In one form, the vehicle controller handles a level 1 function, and the security controller handles level 2 and level 3 monitoring. However, in this solution, a safety supervisor module is added to monitor a status of the vehicle controller. The module has a same input as a module to be monitored. Correctness of a running result is ensured by comparing an output result of the module with that of the monitored module. Correctness of execution logic of the EM module cannot be checked.

For another example, an agent process is started up, and the agent process loads a dynamic link library linked to the agent process to a memory; the agent process creates a first subprocess, and the first subprocess loads a first program by calling an entry function of the program; and the agent process creates a second subprocess, and the second subprocess loads a second program by calling an entry function of the second program, where the first program and the second program share a memory occupied by the dynamic link library. In other words, a plurality of programs loaded by using a cinit agent process share the memory of the dynamic link library loaded by using the agent process, to reduce memory overheads. However, a problem that the non-signal-safe function cannot be called between fork and exec is not solved. The cinit agent process is a resident process and needs to continuously run.

Therefore, this application provides a management apparatus and a process startup method, to resolve a problem that the EM cannot call the non-signal-safe function when starting up the process, so that the EM meets the function security requirement.

First, a management apparatus provided in this application is described. The management apparatus may be deployed in the vehicle provided in this application, or the management apparatus may be all or some functions integrated in the vehicle provided in this application.

FIG. 6 is a diagram of a structure of a management apparatus according to this application.

The management apparatus may include a management module 601 and an agent module 602.

The management module 601 is configured to manage a running status of at least one process. For example, a first process is used as an example for description in this application. The first process mentioned in the following may be any one of the at least one process.

The agent module 602 is configured to: in a process of starting up the first process, obtain configuration information that is of the first process and that is input by the management module; and call a parameter configuration function based on the configuration information of the first process to set a parameter of the agent module, and call a startup function to start up the first process. The parameter configuration function may include a signal-safe function and a non-signal-safe function, and may be used to configure a parameter required for startup or running, for example, may be used to modify a working directory, modify a resource group, bind a core, or set a scheduling policy.

Therefore, in an implementation of this application, in a process in which the management module starts up the process, the configuration information of the process may be sent to the agent module, and the agent module sets the parameter of the agent module based on the configuration information and calls the startup function to start up the first process. Therefore, when configuring the parameter, the agent module may call the signal-safe function or the non-signal-safe function, to implement parameter configuration and successfully start up the first process. This can avoid a problem that the security requirement is not satisfied because the management module cannot call the non-signal-safe function, so that the management module satisfies the function security requirement.

Specifically, the at least one process managed by the management module may be all or some processes running in a system in which the management apparatus is deployed. For example, an operating system (operating system, OS) may be deployed in a vehicle, and the at least one process may be all or some processes started up when an application (application, app) installed in the OS runs.

It should be understood that before the agent module starts up the process or when the agent module starts up the process, the configuration information of the first process may be input to the agent module, so that the agent module starts up the first process. Specifically, the configuration information of the first process may be directly transmitted by the management module to the agent module, or the agent module may be indicated to read the configuration information of the first process from stored data. Specifically, adjustment may be performed based on an actual application scenario. This is not limited in this application.

Specifically, the startup function mentioned in this application may be a function used to start up a process, for example, a function in an exec function family, and may be used to start up another process in one process. The exec function family may include a plurality of functions, for example, execl(), execlp(), execv(), execle() and execvp(). For the exec function mentioned in this application, an adapted function may be selected based on an actual application scenario. This is not limited in this application.

Optionally, before the management module sends the configuration information of the first process to the agent module, the management module may further start up the agent module, so that the process may be started up subsequently by using the agent module.

Specifically, the agent module may be understood as a process, and the management module may create a subprocess by calling a fork function (for example, a fork function), and startup the agent module in the subprocess by calling a startup function. Alternatively, this may be understood as directly converting the subprocess to the agent module. The agent module and the management module may alternatively be understood as processes. For example, the management module is an EM module. The EM module may call a fork function to create a subprocess. The subprocess and a process of the management module run at the same time, and then the exec module may be called to start up the agent module. Alternatively, this may be understood as a process in which the subprocess is converted to the agent module.

Optionally, in a specific implementation, the management module may be the foregoing EM module in the vehicle. In this application, the agent module may be disposed for the EM module. When the EM needs to start up the process, the agent module is first started up, and the configuration information of the process is input to the agent module, so that the agent module may configure the parameter of the agent module based on the received configuration information. Then, the startup function (for example, the exec function) is called to start up the first process. In other words, the parameter configuration of the first process is performed by the agent module by calling the signal-safe function or the non-signal-safe function, and the EM does not need to call the non-signal-safe function. When the non-signal-safe function needs to be called, the agent module may call the non-signal-safe function, so that the EM module satisfies the function security requirement, and running security of the EM module is improved.

Optionally, in a process of starting up the first process, the agent module may specifically call the non-signal-safe function to configure the parameter of the agent module. Therefore, when the non-signal-safe function needs to be called, the agent module may call the non-signal-safe function, and the management module may not need to call the non-signal-safe function, so that the management module satisfies the function security requirement, and running security of the management module is improved.

In a possible implementation, the configuration information of the first process includes one or more of the following: a startup parameter used to start up the first process, an environment variable used to run the first process, a resource group used to run the first process, a core number of a CPU that runs the first process, a priority corresponding to the first process, a scheduling policy corresponding to the first process, a security policy corresponding to the first process, a memory policy corresponding to the first process, or the like.

Optionally, as shown in FIG. 7, the management apparatus may further include a monitoring module 603, configured to: obtain status information, where the status information may include information generated when the at least one process is started up or run; and check the status information of the at least one process. If the status information of the at least one process is abnormal, the monitoring module 603 triggers the management module 601 or another module (for example, an SM module or a PHM module) to process a process in which an exception occurs, for example, restart up or stop running.

Therefore, in an implementation of this application, the monitoring module is disposed for the management module, and is configured to monitor a running status of the process managed by the management module, to ensure that internal logic of the EM is correctly executed, so that internal execution logic of the EM satisfies a function security requirement.

In a possible implementation, the monitoring module may be specifically configured to receive the status information sent by the management module. Therefore, the monitoring module may monitor the running status of the at least one process based on the status information reported by the management module, to improve running security of the process managed by the management module.

Some information in the status information may alternatively be sent by the agent module to the monitoring module. For example, actual configuration information of the process may be sent by the agent module to the monitoring module after completing configuration, and information such as a startup/stop sequence of the process and an actual dependency relationship of the process may be sent by the management module to the monitoring module. Specifically, adjustment may be performed based on an actual application scenario. This is not limited in this application.

Optionally, the monitoring module may receive the status information reported by the management module, and may further actively collect status information generated by the at least one process managed by the management module. This may be specifically adjusted based on an actual application scenario. For example, some information in the status information may alternatively be sent by the agent module to the monitoring module. For example, the actual configuration information of the process may be sent by the agent module to the monitoring module, and the startup/stop sequence of the process, the actual dependency relationship of the process, and the like may be sent by the management module to the monitoring module. Specifically, adjustment may be performed based on an actual application scenario. This is not limited in this application.

Specifically, the status information may specifically include one or more of the following: abnormal abort of any process, a startup sequence of the at least one process, a shutdown sequence of the at least one process, a dependency sequence of the at least one process in a startup or shutdown process, startup information configured by the management module for the at least one process, or the like, where the startup information configured by the management module for the at least one process includes at least one of a startup parameter, an environment variable, a resource group, a running core number, a priority, or a scheduling policy.

Optionally, in a possible scenario, the monitoring module may be configured to: check whether the at least one process is started up or stopped according to a preset sequence, and if not, trigger the EM module or another module (for example, the SM module or the PHM module) to adjust the running status of the at least one process according to the preset sequence, for example, trigger the management module to restart up or abort the process according to the preset sequence. Therefore, after it is detected that a running sequence of the at least one process managed by the management module is abnormal, a corresponding module may be triggered to readjust the running status of the at least one process, to ensure that the process managed by the management module runs according to the preset sequence.

In addition, according to the management apparatus provided in this application, the monitoring module may alternatively be separately disposed for the management module. In other words, the agent module and the monitoring module are decoupled, and may be separately disposed in different apparatuses.

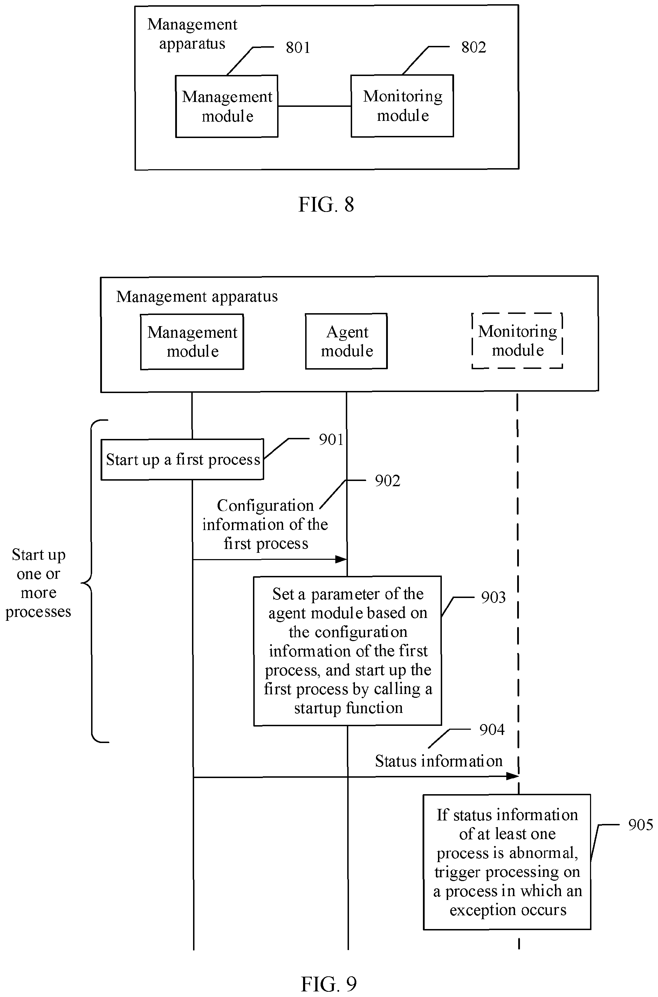

It may be understood that this application further provides a management apparatus, including only a management module and a monitoring module. As shown in FIG. 8, the management apparatus may include a management module 801 and a monitoring module 802.

The management module 801 is configured to manage a running status of at least one process running in the management apparatus.

The monitoring module 802 is configured to obtain status information of the at least one process, where the status information includes information generated when the at least one process is started up or run; and check a startup status of the at least one process, and if the startup status of the at least one process is abnormal, trigger processing on a process in an abnormal state.

Therefore, in an implementation of this application, the monitoring module is disposed for the management module, and monitoring a running status of the at least one process managed by the management module may be understood as monitoring execution correctness of the management module, to ensure that internal logic of the management module is executed correctly, and internal execution logic of the management module satisfies a function security requirement.

In addition, a part similar to that of the management apparatus in FIG. 6 is not described again.

This application further provides a method based on the foregoing management apparatus.

First, with reference to the management apparatuses provided in FIG. 6 and FIG. 7, this application provides a process startup method. As shown in FIG. 9, the method includes the following steps.

901: Trigger a management module to start up a first process.

For the management module, refer to related descriptions in FIG. 6 and FIG. 7. Details are not described herein.

The first process may be any process managed by the management module. When the first process needs to be started up, the management module is triggered to start up an agent module to start up the first process. There may be a plurality of manners of triggering startup of the first process. A startup/stop sequence of one or more processes may be preset, and the startup/stop sequence of the one or more processes is sent to the management module, to trigger the management module to start up/stop the one or more processes according to the startup/stop sequence.

For example, a function conversion diagram may be preset, where the function conversion diagram includes a startup/stop sequence of each function. When function group conversion is performed, the management module may be triggered to start up each process according to the preset sequence. In this application, the first process is used as an example for description. The first process may be any one of the one or more processes that need to be started up.

902: Input configuration information of the first process to the agent module by using the management module.

After the management module determines to start up the first process, that is, after the management module is triggered to start up the first process, the management module may start up the agent module, configure a parameter of the first process by using the agent module, and start up the first process.

Further, the agent module may also be understood as a process, and starting up the agent module is starting up a process. Therefore, the agent module may be started up in a process of starting up the process. For example, before the configuration information of the first process is input to the agent module by using the management module, a fork function may further be called by using the management module to create a subprocess, and a startup function is called to trigger startup of the agent module in the subprocess.

903. Trigger the agent module to set a parameter of the agent module based on the configuration information of the first process, and start up the first process by calling the startup function.

After triggering startup of the agent module, the management module may input configuration information of a process that needs to be started up to the agent module, so that the agent module may configure the parameter of the agent module based on a configuration parameter, and call the startup function to start up the first process.

Specifically, the configuration information of the first process includes one or more of the following: a startup parameter used to start up the first process, an environment variable used to run the first process, a resource group used to run the first process, a core number of a CPU that runs the first process, a priority corresponding to the first process, a scheduling policy corresponding to the first process, a security policy corresponding to the first process, a memory policy corresponding to the first process, or the like.

Generally, when configuring the parameter of the agent module, the agent module may call a signal-safe function and/or a non-signal-safe function to configure the parameter of the agent module. The signal-safe function may be a function that is safely called from a signal processing program. However, functions of some functions cannot be safely called, namely, non-signal-safe functions. For example, non-entry functions called from the signal processing program are generally unsafe. For example, some interfaces are defined in a portable operating system interface of UNIX (portable operating system interface of UNIX, POSIX). The signal-safe function and the non-signal-safe function may be shown in Table 1.

**Table 1**

| Function | Involved POSIX interface | Signal safety |
|---|---|---|
| Modifying a working directory | chdir | Yes |
| Modifying a user and an owner group | getgid | Yes |
| | getuid | Yes |
| | setgroups | No |
| | setgid | Yes |
| | setuid | Yes |
| Modifying a resource group | open | Yes |
| | write | Yes |
| | close | Yes |
| Core binding | sched_setaffinity | No |
| Setting a scheduling policy and a priority | sched_setscheduler | No |
| SELinux configuration | is_selinux_enabled | No |
| (non-AUTOSAR specification function) | setcon | No |
| | setfilecon | No |

It may be understood that, in the management apparatus provided in this application, the EM needs to perform operations such as configuring a resource group, a scheduling policy, and a scheduling priority before starting up an application. Some functions depend on the non-signal-safe function, and the non-signal-safe function may be called by using the agent module, so that the EM satisfies the security requirement.

Therefore, in an implementation of this application, the agent module may be disposed in the management apparatus, the configuration information of the process may be sent to the agent module, and the agent module sets the parameter of the agent module based on the configuration information and calls the startup function to start up the first process. Therefore, when configuring the parameter, the agent module may call the signal-safe function or the non-signal-safe function, to implement parameter configuration and successfully start up the first process. This can avoid a problem that the security requirement is not satisfied because the management module cannot call the non-signal-safe function, so that the management module satisfies the function security requirement.

904: The management module sends status information of at least one process to a monitoring module.

Specifically, the management module may send, to the monitoring module in real time, status information of one or more processes managed by the management module, that is, information generated when the one or more processes are run, so that the monitoring module can monitor statuses of the one or more processes.

Specifically, the status information includes at least one of the following: abnormal abort of any process, a startup sequence of the at least one process, a shutdown sequence of the at least one process, a dependency sequence of the at least one process in a startup or shutdown process, or startup information configured by the management module for the at least one process, where the startup information configured by the management module for the at least one process includes at least one of a startup parameter, an environment variable, a resource group, a running core number, a priority, or a scheduling policy.

Certainly, the status information of the at least one process may alternatively be actively read or queried by the monitoring module.

In addition, some information in the status information may alternatively be sent by the agent module to the monitoring module. For example, actual configuration information of the process may be sent by the agent module to the monitoring module, and a startup/stop sequence of the process, an actual dependency relationship of the process, and the like may be sent by the management module to the monitoring module. Specifically, adjustment may be performed based on an actual application scenario. This is not limited in this application.

905: If the status information of the at least one process is abnormal, the monitoring module triggers processing on a process in which an exception occurs.

After obtaining the status information of the at least one process, the monitoring module may check the status information of the at least one process. If the status information of the at least one process is abnormal, the monitoring module triggers the management module or another module to process the process in which the exception occurs. Specifically, processing may be performed in a user-defined manner, or processing may be performed in a preset processing manner, for example, restarting up a function group or restarting up the process.

Optionally, specifically, it may be checked, by using the monitoring module, whether the at least one process is started up or stopped according to a preset sequence, and if not, the adjustment of the running status of the at least one process according to the preset sequence is triggered, for example, the function group is restarted up or the process is restarted up.

Therefore, in an implementation of this application, the monitoring module is disposed for the management module, and monitoring the running status of the at least one process managed by the management module may be understood as monitoring execution correctness of the management module, to ensure that internal logic of the management module is executed correctly, and internal execution logic of the management module satisfies the function security requirement.

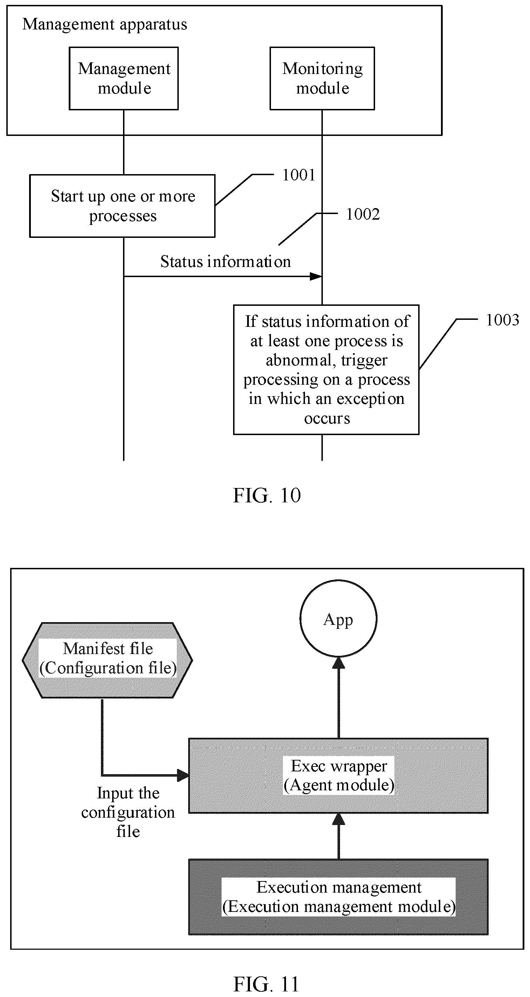

With reference to FIG. 8, this application further provides a process management method. As shown in FIG. 10, the method includes the following steps.

1001: A management module starts up one or more processes.

For a procedure of starting up the one or more processes, refer to the foregoing step 901 to step 904. Details are not described herein.

1002: The management module reports status information to a monitoring module, where the status information includes information generated when at least one process is started up or run.

1003: If a startup status of the at least one process is abnormal, trigger the management module to process a process in an abnormal state.

For step 1002 and step 1003, refer to the foregoing step 904 and step 905. Details are not described herein.

Therefore, in an implementation of this application, the monitoring module is disposed for the management module, and monitoring a running status of the at least one process managed by the management module may be understood as monitoring execution correctness of the management module, to ensure that internal logic of the management module is executed correctly, and internal execution logic of the management module satisfies the function security requirement.

For ease of understanding, the following describes in detail, with reference to the AUTOSAR, the management apparatus and the steps in the method procedure provided in this application.

The management module provided in this application may be an EM module in the AUTOSAR, or steps performed by the management module in the management apparatus provided in this application may be performed by the EM module. The agent module provided in this application may be referred to as an exec wrapper, and the monitoring module may be referred to as an EM checker.

In this application, an exec wrapper agent module is added to resolve a limitation that the EM module cannot call a non-signal-safe function between fork and exec. Core code for starting up an application is placed in the agent module, to decouple process status management from a process startup function. This facilitates extension of EM functions. It can be understood that in the architecture with the added exec wrapper agent, the process status management is decoupled from the startup function, and the problem that the non-signal-safe function cannot be called is resolved, so that EM code satisfies a function security requirement.

In addition, using an exec wrapper agent process to start up an application can be used not only in the EM module, but also in another scenario where an application needs to be started up in an operating system. For example, some management processes can start up applications periodically or according to specific rules based on parameters configured by a user. In this process, an exec wrapper agent process solution can be used to resolve the problem that the non-signal-safe function cannot be called between fork and exec, to improve system running security. In the following embodiments of this application, for example, an example in which the EM starts up a process is used for description. This is not limited.

An EM checker monitoring component is added to monitor an EM process management status in real time. When detecting that the EM runs abnormally (for example, the EM aborts abnormally, a dependency sequence during application startup and shutdown is incorrect, or a resource group, a running core number, a priority, and a scheduling policy configured by the EM for an application are incorrect), error handling is performed to improve system security. It may be understood that an independent EM checker mechanism is added to monitor execution correctness of the EM, to ensure that internal logic of the EM is executed correctly, and internal execution logic of the EM satisfies a function security requirement.

For example, an architecture of the management apparatus provided in this application may be shown in FIG. 11. The management apparatus may include an EM module and an exec wrapper. The EM may be configured to manage a status of a process running in the management apparatus, and the exec wrapper may be configured to start up a to-be-started-up process.

First, the EM triggers startup of the exec wrapper, and transfers configuration information of an application that needs to be started up to the exec wrapper. A manifest file shown in FIG. 11 is the configuration information of the application to be started up. Specifically, an input parameter, an environment variable, or the like of a main function used when the process is started up may be included.

Based on the transmitted information, the exec wrapper sets a computing core, a scheduling policy (usually provided by a kernel), or a resource limit (for example, CPU usage or memory usage) for running the application.

Then, the exec wrapper calls a function in an exec function family to convert a process in the exec wrapper to an application to be started up. In this way, the application is started up.

According to the process startup method provided in this application, it may be understood that when the EM needs to start up the process, the exec wrapper is called to start up the process, and the exec wrapper may call the signal-safe function and the non-signal-safe function to implement parameter configuration, to successfully start up the application.

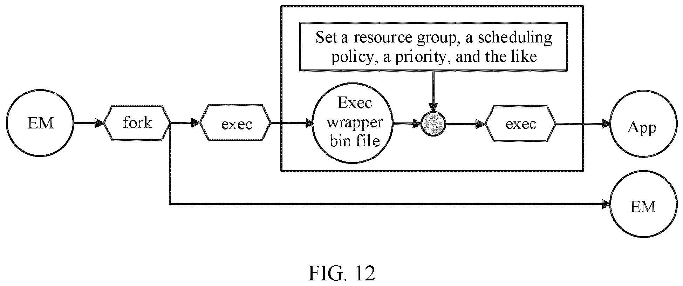

For example, a procedure of starting up the process may be shown in FIG. 12. First, the EM calls a fork function to fork a subprocess. In this case, the subprocess may be understood as a parallel process the same as that of the EM, that is, the subprocess is parallel to an EM process. Then, the subprocess calls an exec function to start up the exec wrapper. That is, the subprocess directly converts the subprocess to the exec wrapper and transfers a configuration file to the exec wrapper. The exec wrapper module may call a corresponding parameter configuration function based on the configuration file to obtain information like a resource group, a scheduling policy, or a priority required for starting up or running an app. After configuration is complete, the exec function is called to convert the process in the exec wrapper to an app process, to start up the app.

In an implementation of this application, the EM process status management is decoupled from the startup function based on an agent process architecture. The exec wrapper module is added to implement process configuration (for example, configuring a resource group, a running core number, a priority, and a scheduling policy), function extension (functions beyond EM specifications, for example, configuring a security policy and a memory policy), application startup (a method in which fork is used once and exec is used twice is used to resolve the problem of calling the non-signal-safe function), and the like to resolve the restriction that the non-signal-safe function cannot be used between fork-exec calling by the EM module. Core code for starting up the application is placed in the agent module, to decouple the process status management from the process startup function. This facilitates extension of EM functions. Therefore, in an implementation of this application, the exec wrapper agent module resolves the limitation that the non-signal-safe function cannot be used between fork and exec calling when the process is started up. The core code for starting up the application is placed in the agent module, to decouple the process status management from the startup function. This facilitates extension and standardization of the EM functions.

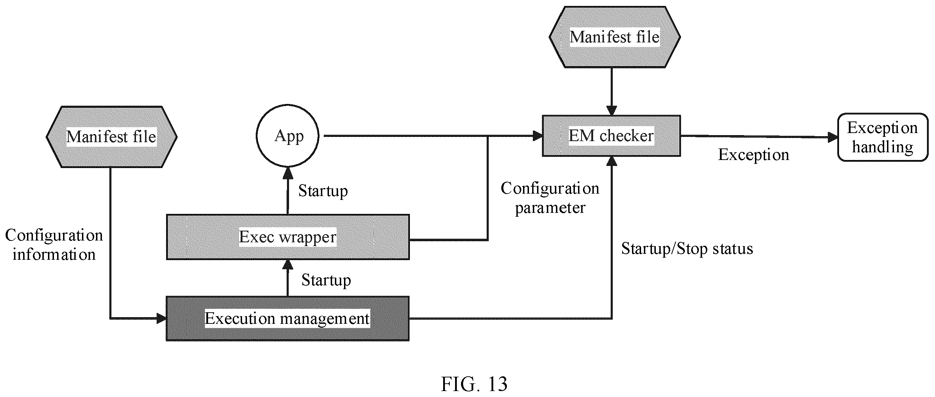

In addition to the exec wrapper, the EM checker monitoring component may further be set to monitor the EM process management status in real time. For example, as shown in FIG. 13, a file that stores configuration information of an application is configured for the EM and the EM checker. The EM needs to start up and stop a process during function group conversion, and the exec wrapper is started up first when the process is started up. In addition, information about an application to be started up is transferred to the exec wrapper in a startup parameter, an environment variable, or a configuration file. Based on the obtained application configuration information, the exec wrapper configures a resource group, a running core number, a priority, and a scheduling policy of the application, and then starts up the corresponding application. In a process in which the EM triggers process startup, the EM may report a status of the process to the EM checker in real time, and the EM checker checks, based on configuration information of the application, a status of the process started up by the EM, for example, checks a startup/stop sequence, a resource group, a running core number, a priority, and a scheduling policy of the process. When the EM checker detects an exception, for example, the EM aborts abnormally, a dependency sequence during startup and shutdown of the application is incorrect, or a resource group, a running core number, a priority, and a scheduling policy configured by the EM for the application are incorrect, exception handling is triggered, for example, SM is notified to restart up a function group or the EM is triggered to restart up an abnormal process.

Therefore, in an implementation of this application, in addition to setting the exec wrapper to perform process startup, the EM checker is further set to monitor a status of a process running in the EM, to resolve a problem that an EM running error cannot be monitored due to a random failure of a system, so that the EM satisfies a function security requirement.

In addition, the EM checker provided in this application may alternatively be decoupled from the exec wrapper, that is, the EM checker may be separately disposed in the management apparatus.

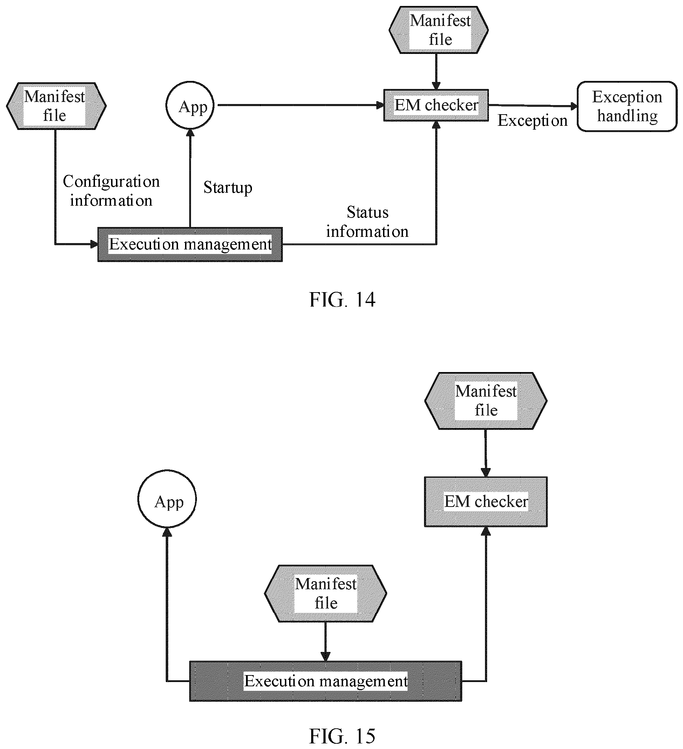

For example, as shown in FIG. 14, a file that stores configuration information of an application is configured for an EM and an EM checker. The EM starts up a process when a status of a function group changes, and reports a status of the process to the EM checker in real time. Alternatively, the EM checker actively reads or queries a real-time status of the process managed by the EM. The EM checker checks a status of the process started up by the EM based on the application configuration information. When the EM checker detects an exception, for example, the EM aborts abnormally, a dependency sequence during startup and shutdown of the application is incorrect, or a resource group, a running core number, a priority, and a scheduling policy configured by the EM for the application are incorrect, exception handling is triggered, for example, SM is notified to restart up a function group or the EM is triggered to restart up an abnormal process.

When the EM checker is deployed independently, the EM checker may be deployed as an independent functional module, or may be deployed in an existing functional module, to monitor the status of the process managed by the EM.

For example, as shown in FIG. 15, an EM checker may be independently deployed. The EM checker is deployed as an independent process, so that an EM module can complete a status monitoring requirement of the EM module without depending on another module of an AP. This is applicable to a scenario in which a user does not need to deploy all components of the AP.

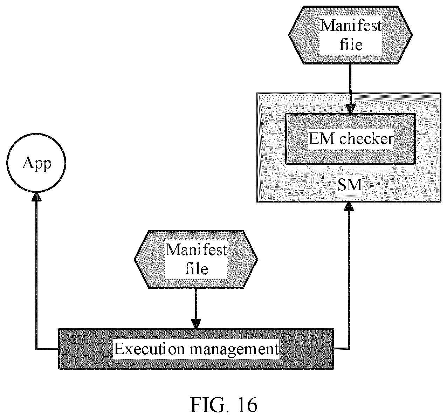

For another example, as shown in FIG. 16, the EM checker may be provided as a plug-in or a dynamic library for an existing module, for example, an SM module or a PHM module, to implement a function of monitoring a status of a process started up by the EM. In this embodiment, the EM checker, as the plug-in or the dynamic library, may be dynamically integrated by another AP component, to facilitate extension of functions of an existing component. For example, the SM module is mainly used to manage a status of a process function group. The EM checker integrated in the SM module can monitor correctness of execution of a function group conversion command sent by the SM module.

In an implementation of this application, an independent checker mechanism is added to monitor correctness of execution by the EM. After the process is started up, an EM status management module notifies the EM checker to collect process information (which can be collected by using related capabilities provided by an OS or by using the exec wrapper), and checks a startup and stop sequence, a resource group, a running core number, a priority, and a scheduling policy of an application. When the check fails, user-defined error handling is triggered. The EM checker may be integrated into the existing module like the SM as the plug-in or deployed as the independent process. Therefore, in this embodiment, the EM checker monitoring component is added to monitor the EM process management status in real time, and perform error handling when detecting that the EM runs abnormally, to improve system security.

An embodiment of this application further provides a digital processing chip. A circuit and one or more interfaces that are configured to implement the management apparatuses shown in FIG. 6 to FIG. 16 or functions of the management apparatuses are integrated into the digital processing chip. When a memory is integrated into the digital processing chip, the digital processing chip may complete the method steps in any one or more of the foregoing embodiments. When no memory is integrated into the digital processing chip, the digital processing chip may be connected to an external memory through a communication interface. The digital processing chip implements, based on program code stored in the external memory, the actions performed by the control device in the foregoing embodiments.

An embodiment of this application further provides a computer program product. When the computer program product runs on a computer, the computer performs the steps performed by the management apparatuses described in embodiments shown in FIG. 6 to FIG. 16.

The data transmission apparatus provided in embodiments of this application may be a chip. The chip includes a processing unit and a communication unit. The processing unit may be, for example, a processor. The communication unit may be, for example, an input/output interface, a pin, or a circuit. The processing unit may execute computer executable instructions stored in a storage unit, so that the chip in a server performs the data transmission method described in the embodiments shown in FIG. 6 to FIG. 16. Optionally, the storage unit is a storage unit in the chip, for example, a register or a cache. Alternatively, the storage unit may be a storage unit that is in the wireless access device and that is located outside the chip, for example, a read-only memory (read-only memory, ROM) or another type of static storage device that can store static information and instructions, a random access memory (random access memory, RAM), and the like.

Specifically, the processing unit or the processor may be a central processing unit (central processing unit, CPU), a network processor (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, a discrete hardware component, or the like. The general-purpose processor may be a microprocessor, or may be any conventional processor, or the like.

The processor mentioned anywhere above may be a general-purpose central processing unit, a microprocessor, an ASIC, or one or more integrated circuits configured to control program execution of the steps in FIG. 6 to FIG. 16.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In the specification, claims, and accompanying drawings of this application, terms "first", "second", "third", "fourth", and so on (if any) are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. In addition, the terms "include" and "have" and any variants thereof are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

## Claims

1. A management apparatus, used in a vehicle and comprising a management module and an agent module, wherein
the management module is configured to manage a running status of at least one process; and
the agent module is configured to:
in a process of starting up a first process, obtain configuration information that is of the first process and that is sent by the management module, wherein the first process is any one of the at least one process; and
call a parameter configuration function based on the configuration information of the first process to set a parameter of the agent module, and start up the first process by calling a startup function, wherein the parameter configuration function comprises at least one of a signal-safe function and a non-signal-safe function.

2. The management apparatus according to claim 1, wherein the management module is further configured to:
before sending the configuration information of the first process to the agent module, start up the agent module.

3. The management apparatus according to claim 2, wherein
the management module is configured to: create a subprocess by calling a fork function, and start up the agent module in the subprocess by calling the startup function.

4. The management apparatus according to any one of claims 1 to 3, wherein
the agent module is configured to call the non-signal-safe function to set the parameter of the agent module based on the configuration information of the first process.

5. The management apparatus according to any one of claims 1 to 3, wherein the management apparatus further comprises a monitoring module, configured to:
obtain status information of the at least one process, wherein the status information of the at least one process comprises information generated when the at least one process is started up or run; and
check the status information of the at least one process, and if the status information of the at least one process is abnormal, trigger processing on a process in which an exception occurs.

6. The management apparatus according to claim 5, wherein
the monitoring module is configured to receive the status information that is of the at least one process and that is sent by the management module.

7. The management apparatus according to claim 5 or 6, wherein the status information of the at least one process comprises at least one of the following:
abnormal abort of any process, a startup sequence of the at least one process, a shutdown sequence of the at least one process, a dependency sequence of the at least one process in a startup or shutdown process, or startup information configured by the management module for the at least one process, wherein the startup information configured by the management module for the at least one process comprises at least one of a startup parameter, an environment variable, a resource group, a running core number, a priority, or a scheduling policy.

8. The management apparatus according to any one of claims 5 to 7, wherein
the monitoring module is configured to: check whether the at least one process is started up or stopped according to a preset sequence, and if not, trigger to adjust the running status of the at least one process according to the preset sequence.

9. The management apparatus according to any one of claims 1 to 8, wherein the configuration information of the first process comprises one or more of the following:
a startup parameter used to start up the first process, an environment variable used to run the first process, a resource group used to run the first process, a core number of a central processing unit CPU that runs the first process, a priority corresponding to the first process, a scheduling policy corresponding to the first process, a security policy corresponding to the first process, or a memory policy corresponding to the first process.

10. A management apparatus, used in a vehicle and comprising a management module and a monitoring module, wherein
the management module is configured to manage a running status of at least one process;
the monitoring module is configured to obtain status information of the at least one process, wherein the status information of the at least one process comprises information generated when the at least one process is run or started up; and
the monitoring module is further configured to: check the status information of the at least one process, and if the status information of the at least one process is abnormal, trigger processing on a process in an abnormal state.

11. The management apparatus according to claim 10, wherein
the monitoring module is configured to receive the status information that is of the at least one process and that is sent by the management module.

12. The management apparatus according to claim 10 or 11, wherein the status information of the at least one process comprises at least one of the following:
abnormal abort of any process, a startup sequence of the at least one process, a shutdown sequence of the at least one process, a dependency sequence of the at least one process in a startup or shutdown process, or startup information configured by the management module for the at least one process, wherein the startup information configured by the management module for the at least one process comprises at least one of a startup parameter, an environment variable, a resource group, a running core number, a priority, or a scheduling policy.

13. The management apparatus according to any one of claims 10 to 12, wherein
the monitoring module is configured to: check whether the at least one process is started up according to a preset sequence, and if not, trigger to adjust the running status of the at least one process according to the preset sequence.

14. A process startup method, applied to a management apparatus, wherein the management apparatus comprises a management module and an agent module, and the method comprises:
sending configuration information of a first process to the agent module by using the management module, wherein the first process is any one of at least one process managed by the management module; and
triggering, by using the management module, the agent module to call a parameter configuration function based on the configuration information of the first process to set a parameter of the agent module, and starting up the first process by calling a startup function, wherein the parameter configuration function comprises at least one of a signal-safe function and a non-signal-safe function.

15. The method according to claim 14, wherein before the sending configuration information of a first process to the agent module by using the management module, the method further comprises:
starting up the agent module by using the management module.

16. The method according to claim 15, wherein the starting up the agent module by using the management module comprises:
creating a subprocess by calling a fork function by using the management module, and starting up the agent module in the subprocess by calling the startup function.

17. The method according to any one of claims 14 to 16, wherein the setting, by using the agent module, a startup parameter of the agent module based on the configuration information of the first process comprises:
calling the non-signal-safe function by using the agent module, and setting the startup parameter of the agent module based on the configuration information of the first process.

18. The method according to any one of claims 14 to 17, wherein the management apparatus further comprises a monitoring module, and the method further comprises:
obtaining status information of the at least one process by using the monitoring module, wherein the status information comprises information generated when the at least one process is started up or run; and
checking the status information of the at least one process by using the monitoring module, and if the status information of the at least one process is abnormal, triggering, by using the monitoring module, processing on a process in an abnormal state.

19. The method according to claim 18, wherein the obtaining status information by using the monitoring module comprises:
receiving, by using the monitoring module, the status information that is of the at least one process and that is sent by the management module.

20. The method according to claim 18 or 19, wherein the status information comprises at least one of the following:
abnormal abort of any process, a startup sequence of the at least one process, a shutdown sequence of the at least one process, a dependency sequence of the at least one process in a startup or shutdown process, or startup information configured by the management module for the at least one process, wherein the startup information configured by the management module for the at least one process comprises at least one of a startup parameter, an environment variable, a resource group, a running core number, a priority, or a scheduling policy.

21. The method according to any one of claims 18 to 20, wherein the checking the status information of the at least one process by using the monitoring module, and if the status information of the at least one process is abnormal, triggering the management module to process a process in an abnormal state comprises:
checking, by using the monitoring module, whether the at least one process is started up or stopped according to a preset sequence, and if not, triggering, by using the monitoring module, the management module to adjust a running status of the at least one process according to the preset sequence.

22. The method according to any one of claims 14 to 21, wherein the configuration information of the first process comprises one or more of the following:
a startup parameter used to start up the first process, an environment variable used to run the first process, a resource group used to run the first process, a core number of a CPU that runs the first process, a priority corresponding to the first process, a scheduling policy corresponding to the first process, a security policy corresponding to the first process, or a memory policy corresponding to the first process.

23. A process management method, applied to a management apparatus, wherein the management apparatus comprises a management module and a monitoring module, and the method comprises:
managing a running status of at least one process by using the management module;
obtaining status information of the at least one process by using the monitoring module, wherein the status information of the at least one process comprises information generated when the at least one process is started up or run; and
checking the status information of the at least one process by using the monitoring module, and if the status information of the at least one process is abnormal, triggering the management module to process a process in an abnormal state.

24. The method according to claim 23, wherein the obtaining status information by using the monitoring module comprises:
receiving, by using the monitoring module, the status information that is of the at least one process and that is sent by the management module.

25. The method according to claim 23 or 24, wherein the status information of the at least one process comprises at least one of the following:
a startup sequence of the at least one process, a shutdown sequence of the at least one process, a dependency sequence of the at least one process in a startup or shutdown process, or startup information configured by the management module for the at least one process, wherein the startup information configured by the management module for the at least one process comprises at least one of a startup parameter, an environment variable, a resource group, a running core number, a priority, or a scheduling policy.

26. The method according to any one of claims 23 to 25, wherein the checking the status information of the at least one process by using the monitoring module, and if the status information of the at least one process is abnormal, triggering the management module to process a process in an abnormal state comprises:
checking, by using the monitoring module, whether the at least one process is started up according to a preset sequence, and if not, triggering, by using the monitoring module, the management module to adjust the running status of the at least one process according to the preset sequence.

27. A management apparatus, comprising a processor, wherein the processor is coupled to a memory, the memory stores a program, and when program instructions stored in the memory are executed by the processor, steps of the method according to any one of claims 14 to 22 are implemented.

28. A management apparatus, comprising a processor, wherein the processor is coupled to a memory, the memory stores a program, and when program instructions stored in the memory are executed by the processor, steps of the method according to any one of claims 23 to 26 are implemented.

29. A vehicle, comprising the management apparatus according to claim 27 or 28.
